(19) Europäisches Patentamt
European Patent Office
Office européen des brevets

(11) **EP 3 926 005 A1**

(12) **EUROPEAN PATENT APPLICATION**
published in accordance with Art. 153(4) EPC

(43) Date of publication:
**22.12.2021 Bulletin 2021/51**

(21) Application number: **20756061.6**

(22) Date of filing: **07.02.2020**

(51) Int Cl.:
*C08K 7/02* (2006.01)    *C08L 1/00* (2006.01)
*C08L 23/00* (2006.01)    *C08L 27/06* (2006.01)
*C08L 67/02* (2006.01)    *C08L 69/00* (2006.01)
*C08L 77/00* (2006.01)    *C08L 101/00* (2006.01)
*C08K 3/08* (2006.01)

(86) International application number:
**PCT/JP2020/004927**

(87) International publication number:
**WO 2020/166522 (20.08.2020 Gazette 2020/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2019 JP 2019023066**
**17.06.2019 JP 2019112377**

(71) Applicant: **Furukawa Electric Co., Ltd.**
**Tokyo 100-8322 (JP)**

(72) Inventors:
• **HARA, Hidekazu**
**Tokyo 100-8322 (JP)**

• **KIM, Jae Kyung**
**Tokyo 100-8322 (JP)**
• **SAKATO, Jiro**
**Tokyo 100-8322 (JP)**
• **HIROISHI, Jirou**
**Tokyo 100-8322 (JP)**
• **SUZUKI, Toshihiro**
**Tokyo 100-8322 (JP)**
• **TAZUKE, Masami**
**Tokyo 100-8322 (JP)**
• **IKEUCHI, Masato**
**Tokyo 100-8322 (JP)**

(74) Representative: **Forstmeyer, Dietmar et al**
**BOETERS & LIECK**
**Oberanger 32**
**80331 München (DE)**

(54) **RESIN COMPOSITE MATERIAL AND MOLDED BODY**

(57)    A resin composite material, containing a polyolefin resin, and the following (a) and (b) dispersed in the polyolefin resin:
(a) resin particles containing cellulose fibers and a resin different from the polyolefin resin, and having a maximum diameter of 10 $\mu$m or more; and
(b) resin particles containing a resin different from the polyolefin resin, having a maximum diameter of 10 $\mu$m or more, and having an aspect ratio of 5 or more.

## Description

TECHNICAL FIELD

The present invention relates to a resin composite material and a formed body.

BACKGROUND ART

Polyolefin resins are excellent in formability, and formed articles formed by using polyolefin resins are excellent in mechanical characteristics, electrical characteristics, chemical resistance, and the like. Therefore, the polyolefin resins have been widely used as a material for resin formed articles.

Also, so-called general-purpose engineering plastics such as polyethylene terephthalate resins, polyamide resins, and polybutylene terephthalate resins, which have better mechanical strength and heat-resistant temperature than those of the polyolefin resins, have been relatively widely used due to their characteristics. However, problems of being expensive and inferior in water-proof characteristics have been pointed out.

Waste plastics containing these polyolefin resins and general-purpose engineering plastics have been required to be recycled from the viewpoint of reduction in environmental load, effective utilization of resources, and the like. In this recycling, in consideration of compatibility between resins and difference in processing temperature, it is desirable to recover resins by separating the resins according to the type of resin. However, it is not easy to separate resins from waste plastic where various types of resins are mixed according to the type of resin. Even if the resins could be separated, it takes a large amount of labor and cost. As a result, the cost of recycled resins and products formed by using the recycled resins increases. Also, a laminate sheet composed of a plurality of resin layers, used for beverage and food packs and the like (for example, a laminate sheet having a polyethylene terephthalate resin layer and a polyolefin resin layer) is difficult to separate according to the type of resin. When such a laminate sheet in a state in which these resins have not been sufficiently separated is used as a recycled material and subjected to melt-kneading or the like, sufficient integration cannot be imparted to the obtained resin composite material. The obtained resin composite material is inferior in formability and mechanical properties, and thus its practical use in the industry is limited. Under such circumstances, so-called polymer alloys, to which a compatibilizer is blended in order to enhance compatibility between polyethylene terephthalate resin and polyolefin resin, have been proposed (for example, Patent Literatures 1 and 2).

In order to improve mechanical properties of resin products, fiber-reinforced resins formed by blending reinforcing fibers such as glass fiber, carbon fiber, and cellulose fiber in a resin have been known. Among these, a cellulose fiber is light weight and leaves less combustion residues in thermal recycling and the like, and is also relatively inexpensive. From the viewpoint of advantages in terms of weight reduction, recyclability, cost, and the like of the resin products, a technique of utilizing a cellulose fiber as a reinforcing fiber have attracted attention.

CITATION LIST

PATENT LITERATURES

Patent Literature 1: JP-A-2003-292740 ("JP-A" means an unexamined published Japanese patent application)
Patent Literature 2: JP-A-2000-256517

SUMMARY OF INVENTION

TECHNICAL PROBLEM

To enhance recycle efficiency of waste plastics and the like, it is conceivable that resins which have not been sufficiently separated are recycled by using a compatibilizer to form a composite, as described in the above Patent Literatures 1 and 2. However, the compatibilizer is generally expensive, and therefore the cost of the obtained composite material increases. Moreover, when the recovered resin contains polyethylene terephthalate resin and the like, for example, if these resins are not sufficiently dried during formation of a composite by kneading resins, there is also a problem in that hydrolysis occurs and desired mechanical characteristics (for example, impact resistance) are hard to obtain.

The present invention provides a resin composite material containing at least a polyolefin resin and a resin different from the polyolefin resin, and exhibiting excellent integration of the entire material and excellent mechanical characteristics such as formability and impact characteristics.

SOLUTION TO PROBLEM

The present inventors found that, in the formation of a composite material formed by using a polyolefin resin, a cellulose fiber, and a resin different from the polyolefin resin, integration of the resulting composite material as a material can be enhanced by employing a form in which a specific size of a resin different from the polyolefin resin is dispersed in the polyolefin resin rather than actively bringing resins into a compatibly mixed state, and as a result, a composite material having excellent formability and sufficiently improved mechanical strength can be obtained. The present inventors continued to conduct further examination based on these findings, and have completed the present invention.

The above problems of the present invention have been solved by the following means.

[1] A resin composite material, containing:

a polyolefin resin; and
the following (a) and (b) dispersed in the polyolefin resin:

(a) resin particles containing cellulose fibers and a resin different from the polyolefin resin, and having a maximum diameter of 10 $\mu$m or more; and
(b) resin particles containing a resin different from the polyolefin resin, having a maximum diameter of 10 $\mu$m or more, and having an aspect ratio of 5 or more.

[2] The resin composite material described in the above item [1], wherein, in the (a) and (b), a maximum diameter of the resin particles is 50 $\mu$m or more.
[3] The resin composite material described in the above item [1] or [2], containing cellulose fibers, wherein a content of the cellulose fibers in the resin composite material is 0.1% by mass or more and 60% by mass or less.
[4] The resin composite material described in any one of the above items [1] to [3], wherein, in the (a) and (b), the resin particles contain a resin having a melting point 10°C or more higher than a melting point of the polyolefin resin.
[5] The resin composite material described in any one of the above items [1] to [4], wherein, in the (a) and (b), the resin particles contain a resin having a melting point of 170°C or more and/or a resin exhibiting an endothermic peak of 170°C or more and 350°C or less as measured by differential scanning calorimetry.
[6] The resin composite material described in any one of the above items [1] to [5], wherein, in the (a) and (b), the resin particles contain at least one type of polyethylene terephthalate, polybutylene terephthalate, and polyamide.
[7] The resin composite material described in any one of the above items [1] to [3], wherein, in the (a) and (b), the resin particles contain a resin having a glass transition temperature of 70°C or more.
[8] The resin composite material described in any one of the above items [1] to [3] and [7], wherein, in the (a) and (b), the resin particles contain at least one type of polycarbonate and polyvinyl chloride.
[9] The resin composite material described in any one of the above items [1] to [8], wherein, in the resin composite material, a content of the resin particles is 0.1 % by mass or more and 60% by mass or less.
[10] The resin composite material described in any one of the above items [1] to [9], containing the (a) dispersed, wherein the resin particles of the (a) contain resin particles having an aspect ratio of 5 or more.
[11] The resin composite material described in any one of the above items [1] to [10], wherein, in the (a) and (b), a maximum diameter of the resin particles is less than 4 mm.
[12] The resin composite material described in any one of the above items [1] to [11], wherein the polyolefin resin contains at least one type of low density polyethylene, high density polyethylene, polypropylene, and an ethylene-based copolymer.
[13] The resin composite material described in any one of the above items [1] to [12], wherein the polyolefin resin contains a polyolefin having a melting point of 180°C or less.
[14] The resin composite material described in any one of the above items [1] to [13], wherein, in the (a) and (b), the resin particles contain polyethylene terephthalate and/or polyamide.
[15] The resin composite material described in any one of the above items [1] to [14],

wherein the polyolefin resin contains low density polyethylene, and
wherein, in the (a) and (b), the resin particles contain polyethylene terephthalate.

[16] The resin composite material described in any one of the above items [1] to [15], containing cellulose fibers having a fiber length of 0.3 mm or more.
[17] The resin composite material described in any one of the above items [1] to [16], containing cellulose fibers having a fiber length of 0.8 mm or more.

[18] The resin composite material described in any one of the above items [1] to [17], containing aluminum dispersed.

[19] The resin composite material described in the above item [18], wherein, in the resin composite material, a content of the aluminum is 1% by mass or more and 40% by mass or less.

[20] The resin composite material described in the above item [18] or [19], wherein, in the resin composite material, a proportion of the number of aluminum dispersoids having an X-Y maximum length of 3 mm or more in the number of aluminum dispersoids having an X-Y maximum length of 0.005 mm or more is less than 10%,

where the X-Y maximum length is a longer length of an X-axis maximum length and a Y-axis maximum length in the surface of the resin composite material,

the X-axis maximum length is a maximum distance between two intersection points where a straight line drawn in a specific direction (X-axis direction) relative to the aluminum dispersoid intersects with an outer periphery of the aluminum dispersoid, and

the Y-axis maximum length is a maximum distance between two intersection points where a straight line drawn in a direction perpendicular to the X-axis direction (Y-axis direction) intersects with the outer periphery of the aluminum dispersoid.

[21] The resin composite material described in any one of the above items [1] to [20], wherein at least a part of constituent materials is derived from a recycled material.

[22] A resin formed body, which is obtainable by using the resin composite material described in any one of the above items [1] to [21].

[23] The resin composite material described in any one of the above items [1] to [21] or the resin formed body described in Claim 22, which is used for a material or a constituent member for civil engineering, a building material, or an automobile.

ADVANTAGEOUS EFFECTS OF INVENTION

The resin composite material of the present invention is excellent in formability and mechanical characteristics such as impact resistance.

BRIEF DESCRIPTION OF THE DRAWINGS

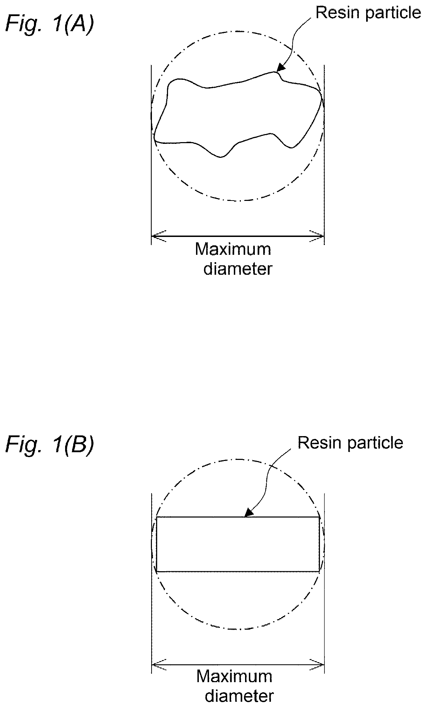

{Figs. 1(A) and 1(B)}

Figs. 1(A) and 1(B) are schematic explanatory drawings illustrating a method of determining the maximum diameter from the contour of a resin particle in a plan view. Fig. 1(A) is a case where a minimum circle inscribed in the contour passes through two points on the contour. Fig. 1(B) is a case where a minimum circle inscribed in the contour passes through four points on the contour.

Preferable embodiments of the present invention will be described.

[Resin composite material]

The resin composite material of the present invention (hereinafter, simply referred to as "composite material of the present invention") is formed by dispersing the following (a) or (b) in a polyolefin resin:

(a) resin particles containing cellulose fibers and a resin different from the polyolefin resin, and having a maximum diameter of 10 $\mu$m or more; and

(b) resin particles containing a resin different from the polyolefin resin, having a maximum diameter of 10 $\mu$m or more, and having an aspect ratio of 5 or more.

A mode of the resin composite material of the present invention is a mode in which the resin composite material is formed by dispersing the above (a) in a polyolefin resin. That is, a mode of the resin composite material of the present invention is a resin composite material formed by dispersing, in a polyolefin resin, resin particles containing cellulose fibers and a resin different from the polyolefin resin, and having a maximum diameter of 10 $\mu$m or more.

Another mode of the resin composite material of the present invention is a form in which the resin composite material is formed by dispersing the above (b) in a polyolefin resin. That is, another mode of the resin composite material of the present invention is a resin composite material formed by dispersing, in a polyolefin resin, resin particles (resin pieces) containing a resin different from the polyolefin resin, having a maximum diameter of 10 $\mu$m or more, and having an aspect ratio of 5 or more.

In the present invention, the "resin particle" is a particulate mass having various shapes and containing a resin of a different type from a polyolefin resin (base resin) constituting a matrix. This "resin particle" is preferably formed by using a resin of a different type from the base resin. A state in which the base resin and the resin particle are formed by using "different resins" can be confirmed by visually observing the contour of the resin particle in observation with an optical microscope or the like, as described below. In the present invention, the maximum diameter of the resin particle is 10 $\mu$m or more.

Further, in a form in which the resin composite material is formed by dispersing the above (b) (that is, a case where the cellulose fiber is not essential), the resin particle has an aspect ratio (the value of the ratio of the maximum diameter to the minimum diameter [maximum diameter/minimum diameter]) of 5 or more. Also, in a form in which the resin composite material is formed by dispersing the above (a) (that is, a case of containing a cellulose fiber), the resin particle preferably has an aspect ratio (the value of the ratio of the maximum diameter to the minimum diameter [maximum diameter/minimum diameter]) of 5 or more.

The composite material of the present invention has excellent formability and improved mechanical strength by employing a form in which the composite material is formed by dispersing specific components specified by the above (a) or (b).

In the above (a) and (b), the resin particle may be dispersed in, for example, a scale shape or a small sheet shape, or a particulate shape, in a polyolefin resin, and when the shape of the resin particle is a scale shape or a small sheet shape, the resin particle may also be dispersed in a state of being bent, curved, or twisted (these are collectively referred to as "bent structure").

The resin constituting the resin particle is preferably a resin incompatible with a polyolefin resin constituting a matrix. The "incompatible" means that different types of resins (polymers) are not uniformly mixed in the molecular level by simple melt-kneading or the like. In general, in a composition or a formed body containing a plurality of resins which are incompatible to each other, phase separation is observed and a sea-island structure may be formed.

The resin particle in the above (a) and (b) contained in the composite material of the present invention has a maximum diameter of 10 $\mu$m or more. When the maximum diameter is 10 $\mu$m or more, mechanical strength, particularly, impact characteristics can be enhanced. From the viewpoint of further enhancing mechanical strength, the maximum diameter of the resin particle is preferably 20 $\mu$m or more, more preferably 50 $\mu$m or more, even more preferably 100 $\mu$m or more, and still even more preferably 200 $\mu$m or more. Further, the maximum diameter is preferably 400 $\mu$m or more, and preferably 600 $\mu$m or more. From the same point of view, the aspect ratio of the resin particle is preferably 5 or more, more preferably 10 or more, even more preferably 20 or more, and still even more preferably 30 or more. A specific shape of the resin particle having an aspect ratio of 5 or more includes, for example, a needle shape and a fiber shape, in addition to a scale shape, a small sheet shape, and a plate shape. The shape is preferably a scale shape, a small sheet shape, and a plate shape, in terms of enhancing mechanical strength, particularly, impact characteristics.

The resin particle in the above (a) and (b) contained in the composite material of the present invention preferably has a bent structure (usually irregular bent structure) from the viewpoint of further enhancing mechanical strength. Mechanical strength can be enhanced by anisotropy and anchor effect provided by the bent structure. The maximum diameter of the resin particle is preferably less than 4 mm from the viewpoint of formability.

In the present invention, the maximum diameter of the resin particle being X $\mu$m or more means the following. That is, the cross section of the composite material or a press sheet thereof is observed as an observation surface with an optical microscope or the like. In the observation surface (that is, in a plan view from the observation surface), ten resin particles are selected in descending order of size. The maximum diameters of individual ten resin particles are measured, and the average value of the maximum diameters of the ten resin particles is calculated. Then, the observation surface is changed and, in this observation surface, the average value of the maximum diameters of ten resin particles is calculated in the same manner. This is repeated and the average value of the maximum diameters of ten resin particles is obtained for three observation surfaces which are different from each other. When a value obtained by further averaging the obtained three average values is X $\mu$m or more, it is determined that the maximum diameter of the resin particle is X $\mu$m or more.

When the number of resin particles is less than 10 in one observation surface, observation is performed by increasing the observation surface by one until the number of resin particles reaches 10. In this case, a plurality of the observation surfaces which have been observed are collectively considered as one observation surface for determining the average value of the maximum diameters of the ten resin particles.

In the present invention, the aspect ratio of the resin particle being Y or more means the following. That is, the cross section of the composite material or a press sheet thereof is observed as an observation surface with an optical microscope or the like. In the observation surface, ten resin particles are selected in descending order of size. The aspect ratios of individual ten resin particles (maximum diameter/minimum diameters of individual resin particles) are measured, and the average value of the aspect ratios of the ten resin particles is calculated. Then, the observation surface is changed and, in this observation surface, the average value of the aspect ratios of ten resin particles is calculated in the same manner. Similarly, the average value of the aspect ratios of ten resin particles is obtained for three observation surfaces which are different from each other. When a value obtained by further averaging the obtained three average values is Y or more, it is determined that the aspect ratio of the resin particle is Y or more.

When the number of resin particles is less than 10 in one observation surface, observation is performed by increasing the observation surface by one until the number of resin particles reaches 10. In this case, a plurality of the observation surfaces which have been observed are collectively considered as one observation surface for determining the average value of the aspect ratios of the ten resin particles.

In the present invention, the maximum diameter of the resin particle being less than $Z$ $\mu$m means the following. That is, the cross section of the composite material or a press sheet thereof is observed as an observation surface with an optical microscope or the like. In the observation surface, ten resin particles are selected in descending order of size. The maximum diameters of individual ten resin particles are measured, and the average value of the maximum diameters of the ten resin particles is calculated. Then, the observation surface is changed and, in this observation surface, the average value of the maximum diameters of ten resin particles is calculated in the same manner. Similarly, the average value of the maximum diameters of ten resin particles is obtained for three observation surfaces which are different from each other. When a value obtained by further averaging the obtained three average values is less than $Z$ $\mu$m, it is determined that the maximum diameter of the resin particle is less than $Z$ $\mu$m.

When the number of resin particles is less than 10 in one observation surface, observation is performed by increasing the observation surface by one until the number of resin particles reaches 10. In this case, a plurality of the observation surfaces which have been observed are collectively considered as one observation surface for determining the average value of the maximum diameters of the ten resin particles.

When the resin particles are hard to observe in the observation surface of the composite material or when the resin particles are relatively large and a plurality of resin particles are hard to observe in one observation surface, the maximum diameter and the aspect ratio of the resin particle can be obtained by immersing the composite material in, for example, hot xylene, to dissolve and remove the polyolefin resin of a matrix and then observing remaining resin particles according to the measurement method described above.

The "maximum diameter" of the individual resin particle means the diameter of a minimum circle inscribed in the resin particle in a plan view from the observation surface. That is, the "maximum diameter" means the diameter of a circle with a minimum diameter, which encompasses the resin particle inside thereof and is inscribed in the resin particle at the same time. In other words, the "minimum circle inscribed in the resin particle" means a circle passing through at least two points on the circumference (contour) of the resin particle when viewed in a plain surface from the observation surface and the minimum circle among circles encompassing the circumference of the resin particle. An example of a method of determining the maximum diameter is shown in Figs. 1(A) and 1(B). The shape of the resin particle illustrated in Figs. 1(A) and 1(B) is a shape viewed in a plain surface from the observation surface.

Further, the "minimum diameter" of the individual resin particle means the thickness of the thinnest portion of the resin particle. When the resin particle is derived from a sheet-shaped resin raw material, for example, the thickness of the resin particle depends on the thickness of the sheet-shaped resin raw material. In this case, the minimum diameter of the resin particle is the thickness of this resin particle. Further, when the resin particle derived from a sheet-shaped resin raw material is bent and has an overlapping portion (for example, a laminate structure), for example, the thickness of one layer constituting the overlapping portion (for example, one layer constituting the laminate structure) is the minimum diameter of the resin particle. Incidentally, when the sheet-shaped resin raw material is a laminate sheet and constitutes the resin particle in a state in which respective layers constituting the laminate sheet are firmly adhered and integrated, the thickness of the entire laminate structure is the minimum diameter of the resin particle.

The press pressure in the preparation of the press sheet can be, for example, about 4.2 MPa.

The resin of the resin particle may contain a crystalline resin, an amorphous resin, or both resins.

As the crystalline resin, a resin having a melting point 10°C or more higher than the melting point of the polyolefin resin which constitutes a matrix. Such a crystalline resin can be dispersed as a desired resin particle in the polyolefin resin in the kneading and can effectively enhance the mechanical characteristics of the composite material. From this point of view, the crystalline resin is preferably a resin having a melting point 20°C or more higher than the melting point of the polyolefin resin constituting a matrix, more preferably a resin having a melting point 30°C or more higher than the melting point of the polyolefin resin, and even more preferably a resin having a melting point 50°C or more higher than the melting point of the polyolefin resin.

Also, the crystalline resin is preferably a resin having a melting point of 170°C or more and/or a resin exhibiting an endothermic peak of 170°C or more and 350°C or less as measured by differential scanning calorimetry (DSC). Exhibiting an endothermic peak of 170°C or more and 350°C or less means that when a plurality of endothermic peaks are detected, at least one endothermic peak is 170°C or more and 350°C or less.

Examples of a polymer constituting such a crystalline resin include polyethylene terephthalate, polybutylene terephthalate, polyamide, and an ethylene-vinyl alcohol copolymer. Here, the resin particle preferably contains at least one type of polyethylene terephthalate, polybutylene terephthalate, and polyamide (preferably 50% by mass or more, more preferably 60% by mass or more, even more preferably 70% by mass or more, and still even more preferably 80% by mass or more of the resin particle is the at least one type). Further, the resin particle more preferably contains polyethylene terephthalate and/or polyamide (preferably 50% by mass or more, more preferably 60% by mass or more, even more preferably 70% by mass or more, and still even more preferably 80% by mass or more of the resin particle is polyethylene terephthalate and/or polyamide, in other words, the resin particle contains a polymer selected from polyethylene terephthalate and polyamide in the above % by mass or more in total). Further, the resin particle even more preferably contains polyethylene terephthalate (preferably 50% by mass or more, more preferably 60% by mass or more, even more preferably 70% by mass or more, and still even more preferably 80% by mass or more of the resin particle is polyethylene terephthalate).

The polymer constituting the resin particle is preferably at least one type of polyethylene terephthalate, polybutylene terephthalate, and polyamide, also preferably polyethylene terephthalate and/or polyamide, and particularly preferably polyethylene terephthalate. The polyethylene terephthalate has a melting point of around 250 to 260°C, and has an endothermic peak due to fusion at around 250 to 260°C as measured by differential scanning calorimetry (DSC). That is, when the resin particle is polyethylene terephthalate, the resin particle has a melting point of around 250 to 260°C, and has an endothermic peak due to fusion at around 250 to 260°C as measured by differential scanning calorimetry (DSC).

As the amorphous resin, a resin having a glass transition temperature of 70°C or more is preferable. Examples of a polymer constituting such a resin include polycarbonate and polyvinyl chloride. The resin particle preferably contains polycarbonate and/or polyvinyl chloride (preferably 50% by mass or more, more preferably 60% by mass or more, even more preferably 70% by mass or more, and still even more preferably 80% by mass or more of the resin particle is polycarbonate and/or polyvinyl chloride, in other words, the resin particle contains a polymer selected from polycarbonate and polyvinyl chloride in the above % by mass or more in total). Further, the polymer constituting the resin particle is preferably at least one type of polycarbonate and polyvinyl chloride.

The resin particle may be a form in which a plurality of the resins described above are laminated.

The resin particle may also be a resin particle having a thin film layer of aluminum. That is, aluminum firmly adhered to the resin of the resin particle is considered to constitute the resin particle in the present invention, and thus is not considered as an aluminum dispersoid which will be described later.

In the composite material of the present invention, the content of the resin particle is preferably 0.1% by mass or more and 60% by mass or less in the composite material. Mechanical strength can be further enhanced by adjusting the content to 0.1% by mass or more. From the viewpoint of further enhancing mechanical strength, the content of the resin particle in the composite material is more preferably 0.3% by mass or more, more preferably 0.5% by mass or more, even more preferably 1% by mass or more, and even more preferably 2% by mass or more. Further, formability can be further enhanced by adjusting the content of the resin particle in the composite material to 60% by mass or less. From the viewpoint of formability, the content of the resin particle in the composite material is more preferably 50% by mass or less, even more preferably 40% by mass or less, even more preferably 30% by mass or less, even more preferably 20% by mass or less, even more preferably 12% by mass or less, and also preferably 10% by mass or less.

Here, the content of the resin particle can be determined by, for example, further subtracting the amount of the cellulose fiber measured by thermal analysis from the amount of the insoluble component obtained by immersing the composite material in hot xylene at a predetermined temperature to dissolve the polyolefin resin. For the temperature of the hot xylene, when the temperature is, for example, 138°C, polyethylene terephthalate, polyamide resin, and the like are not dissolved, and only polyolefin resin can be dissolved.

When the composite material of the present invention is a form in which the composite material is formed by dispersing the above (a), the composite material is formed by dispersing a cellulose fiber together with a resin particle in a polyolefin resin. Also, in a form in which the composite material is formed by dispersing the above (b), a form may be employed in which the composite material is formed by dispersing a cellulose fiber together with a resin particle. The above (b) is preferably a form in which no cellulose fiber is contained.

Mechanical strength can be further enhanced by being formed by dispersing a resin particle and a cellulose fiber. For example, impact strength and flexural modulus can be enhanced to a desired high level in a well-balanced manner. In the composite material of the present invention, the content of the cellulose fiber is preferably 0.1% by mass or more and 60% by mass or less. Mechanical strength can be further enhanced by adjusting the content to 0.1% by mass or more. From this point of view, the content of the cellulose fiber in the composite material is more preferably 1% by mass or more, even more preferably 5% by mass or more, even more preferably 8% by mass or more, even more preferably 10% by mass or more, and also preferably 15% by mass or more.

Further, formability can be further enhanced by adjusting the content of the cellulose fiber to 60% by mass or less. Moreover, a composite material, in which the cellulose fiber is uniformly dispersed by melt-kneading, can be stably obtained by adjusting the content of the cellulose fiber to 60% by mass or less. Thus, the water absorbing properties of the obtained composite material can be suppressed. From this point of view, the content of the cellulose fiber in the composite material is more preferably 50% by mass or less, even more preferably 40% by mass or less, and even more preferably 30% by mass or less. By adjusting the content of the cellulose fiber to the above preferable range, the impact strength and formability of the composite material of the present invention can be enhanced while the water absorbing properties of the composite material can be sufficiently suppressed.

The content of the cellulose fiber contained in the composite material of the present invention (% by mass) can be determined by employing a value obtained by a thermogravimetric analysis as follows.

<Method of determining content of cellulose fiber (cellulose effective mass ratio)>

A composite material sample (10 mg) which has been dried in advance under the atmosphere at 80°C for 1 hour is subjected to a thermogravimetric analysis (TGA) from 23°C to 400°C under a nitrogen atmosphere at a heating rate of +10°C/min. Then, the content of cellulose fiber (% by mass, also referred to as cellulose effective mass ratio) is calculated by the following [Formula I].

[Formula I] (content of cellulose fiber [% by mass]) = (amount of mass reduction of composite material sample at 200 to 380°C [mg]) × 100/(mass of composite material sample in dried state before thermogravimetric analysis [mg])

Incidentally, when the temperature is raised to 200 to 380°C under a nitrogen atmosphere at a heating rate of +10°C/min, almost all of the cellulose fiber is thermally decomposed and lost. In the present invention, the % by mass calculated by the above [Formula I] is taken as the content of the cellulose fiber contained in the composite material. Incidentally, a part of the cellulose fiber is not lost and remains within this temperature range in some cases, but when the temperature exceeds this temperature range, the cellulose fiber content cannot be distinguished from thermolysis loss or remaining components in a case where resin components are lost or compounds degradable at high temperatures are present together, for example, and as a result, it becomes difficult to measure the cellulose fiber amount. For this reason, the % by mass calculated by the [Formula I] is used for determining the cellulose fiber amount in the present invention. The cellulose fiber amount thus determined and the mechanical properties of the composite material are highly related.

The cellulose fiber dispersed in the composite material preferably contains a cellulose fiber having a fiber length of 0.3 mm or more. Mechanical strength such as impact strength and tensile strength can be further improved by containing the cellulose fiber having a fiber length of 0.3 mm or more. From this point of view, the cellulose fiber dispersed in the composite material preferably contains a cellulose fiber having a fiber length of preferably 0.5 mm or more, more preferably 0.8 mm or more, and even more preferably 1 mm or more.

The length weighted average fiber length of the cellulose fiber dispersed in the composite material of the present invention is preferably 0.3 mm or more. The mechanical strength of the composite material and the formed body thereof can be further improved by containing the cellulose fiber having a fiber length of 0.3 mm or more. From this point of view, the length weighted average fiber length of the cellulose fiber is more preferably 0.6 mm or more. The length weighted average fiber length of the cellulose fiber in the composite material is ordinarily 1.3 mm or less.

Here, the length weighted average fiber length is determined for a dissolution residue (insoluble component) of the composite material when the composite material is immersed in a solvent capable of dissolving resin components in accordance with Pulps-Determination of fibre length by automated optical analysis specified by ISO 16065 2001 (JIS P8226 2006). When the resin constituting the composite material is a polyolefin resin, the length weighted average fiber length can be determined for a dissolution residue (insoluble component) in hot xylene (130 to 150°C) by the above measurement method.

The length weighted average fiber length is a value obtained by dividing the sum of the squares of the fiber lengths of respective measured fibers by the total of the fiber lengths of respective measured fibers. As the characteristics of this average, the influence of the fiber length of the fiber having a longer fiber length, and the influence of the probability density of the fiber having a longer fiber length than the number average fiber length are remarkable compared to the number average fiber length which is a simple average of the fiber lengths.

When the composite material of the present invention contains a cellulose fiber, the total content of the cellulose fiber and the resin particle in the composite material is preferably 2% by mass or more and 80% by mass or less. Mechanical strength can be further enhanced by adjusting the total content to 2% by mass or more. From this point of view, the total content of the cellulose fiber and the resin particle in the composite material is more preferably 5% by mass or more, even more preferably 10% by mass or more, and particularly preferably 15% by mass or more.

Further, formability can be further enhanced by adjusting the total content of the cellulose fiber and the resin particle in the composite material of the present invention to 80% by mass or less. From this point of view, the total content of the cellulose fiber and the resin particle in the composite material is more preferably 60% by mass or less, even more preferably 50% by mass or less, still even more preferably 40% by mass or less, and particularly preferably 35% by mass or less.

In the composite material of the present invention, the polyolefin resin is a resin which becomes a matrix of the composite material. The composite material of the present invention is formed by dispersing the resin particle and the cellulose fiber in a polyolefin resin.

The polyolefin resin preferably contains a polyolefin having a melting point of 180°C or less (preferably 50% by mass or more, more preferably 60% by mass or more, even more preferably 70% by mass or more, and still even more preferably 80% by mass or more of the polyolefin resin is a polyolefin having a melting point of 180°C or less). Further, the polyolefin resin preferably contains at least one type of polyethylene, polypropylene, and an ethylene-based copolymer (copolymer containing an ethylene component as a constituent) (preferably 50% by mass or more, more preferably 60% by mass or more, even more preferably 70% by mass or more, and still even more preferably 80% by mass or more of the polyolefin resin is the at least one type). The polymer constituting the polyolefin resin may be a polyolefin having a melting point of 180°C or less, and is also preferably at least one type of polyethylene, polypropylene, and an ethylene-based copolymer.

The polyolefin resin preferably contains polyethylene (preferably 50% by mass or more, more preferably 60% by mass or more, even more preferably 70% by mass or more, and even more preferably 80% by mass or more of the polyolefin resin is polyethylene). This polyethylene may be low density polyethylene, high density polyethylene, or a mixture thereof. Among these, the polyolefin resin preferably contains low density polyethylene (preferably 50% by mass or more, more preferably 60% by mass or more, even more preferably 70% by mass or more, and even more preferably 80% by mass or more of the polyolefin resin is low density polyethylene).

The above low density polyethylene means a polyethylene having a density of 880 $kg/m^3$ or more and less than 940 $kg/m^3$. The above high density polyethylene means a polyethylene having a density larger than the density of the above low density polyethylene.

The low density polyethylene may be so-called "low density polyethylene" and "ultralow density polyethylene" each having long chain branching, or linear low density polyethylene (LLDPE) in which ethylene and a small amount of $\alpha$-olefin monomer are copolymerized, or further may be "ethylene-$\alpha$-olefin copolymer elastomer" involved in the above density range.

The polyolefin resin constituting the composite material of the present invention may contain a trace amount of carbonyl group. The carbonyl group (C=O) is observed as an absorption peak around 1,700/cm in an infrared absorption spectrum, for example. The presence of the carbonyl group is considered to enhance the adhesiveness of the composite material. The presence of such a carbonyl group can be derived from, for example, oxidization of the polyolefin resin itself or a raw material. The carbonyl group may be contained in a polyolefin resin component of polyethylene laminated paper having a polyolefin thin film layer and an aluminum thin film layer.

The above polyolefin resin, having low melting/softening temperature, allows the cellulose fiber contained in the composite material to be melt-knead without exposing the cellulose fiber to high temperature, and also enables formation. Thus, the polyolefin resin can prevent or reduce deterioration of the cellulose fiber due to high temperature.

Moreover, the polyolefin resin can also prevent the resin particle from being exposed to high temperature, and can cause an original action of the resin particle on the mechanical characteristics to be sufficiently exhibited. For example, when the resin particle is a polyester resin or the like such as polyethylene terephthalate and polybutylene terephthalate, exposing these resins to high temperature at which the resins are softened and melted may promote deterioration of the resins, caused by hydrolysis of the resins in a case where the resins have not been sufficiently dried in advance. However, when the composite material can be kneaded and formed without being exposed to high temperature, the above deterioration can be suppressed. As a result, load on water management of materials before melt-kneading is reduced.

In the composite material of the present invention, the polyolefin resin preferably contains low density polyethylene (preferably 50% by mass or more, more preferably 60% by mass or more, even more preferably 70% by mass or more, and even more preferably 80% by mass or more of the polyolefin resin is low density polyethylene), and the resin particle preferably contains polyethylene terephthalate (preferably 50% by mass or more, more preferably 60% by mass or more, even more preferably 70% by mass or more, and even more preferably 80% by mass or more of the resin particle is polyethylene terephthalate).

When the polyolefin resin in the composite material contains polyethylene and polypropylene as a polymer, the contents thereof in the composite material can be determined based on the soluble mass ratio to hot xylene of the composite material.

- Soluble mass ratio to hot xylene -

The soluble mass ratio to hot xylene is determined as described below in the present invention. In accordance with measurement of a degree of crosslinking in JASO D 618 as the standard for automotive electrical cables, 0.1 to 1 g is cut out from a formed sheet of the composite material and taken as a sample, and this sample is wrapped with a 400-mesh stainless steel mesh, and immersed into 100 mL of xylene at a predetermined temperature for 24 hours. Next, the sample was pulled up therefrom, and then the sample was dried in vacuum at 80°C for 24 hours. From the mass of the sample before and after the test, the soluble mass ratio to hot xylene G (%) is calculated according to the following formula:

$$G = \{(W0 - W)/W0\} \times 100$$

where, W0 is the mass of a composite material before being immersed into hot xylene, and
W is the mass of a composite material after being immersed into hot xylene and then drying and removing xylene.

When the soluble mass ratio to hot xylene at 138°C for the composite material is taken as Ga (%), and the soluble mass ratio to hot xylene at 105°C for the composite material is taken as Gb (%), Ga corresponds to the mass ratio of polyolefin (%), Ga-Gb corresponds to the mass ratio of polypropylene (%), and Gb corresponds to the mass ratio of polyethylene (%).
Here,

$$Ga = \{(W0 - Wa)/W0\} \times 100$$

$$Gb = \{(W0 - Wb)/W0\} \times 100$$

W0: mass of a composite material before being immersed into hot xylene;
Wa: mass of a composite material after being immersed into hot xylene at 138°C and then drying and removing xylene; and
Wb: mass of a composite material after being immersed into hot xylene at 105°C and then drying and removing xylene.

Also, when the insoluble mass ratio to hot xylene at 138°C is taken as Gc (%), Gc is the total amount of components obtained by removing the polyolefin resin from the composite material. When the composite material contains a cellulose fiber and does not contain other inorganic materials which do not pass through a mesh, such as aluminum, the amount of the resin particle can be calculated from the difference between this amount of Gc and the cellulose fiber amount.

$$Gc = \{Wa/W0\} \times 100$$

The matrix resin may contain, for example, a resin compatible with the polyolefin resin in addition to the polyolefin resin as long as the effect of the present invention is not impaired. As such a resin, a resin having a melting point and softening temperature close to those of the polyolefin resin is preferable. Examples thereof include polystyrene resin and a polystyrene-based copolymer.
The composite material of the present invention is also preferably formed by dispersing aluminum in the polyolefin resin. The content of the aluminum (hereinafter, also referred to as aluminum dispersoid) in the composite material is preferably 1% by mass or more and 40% by mass or less. The thermal conductivity, visibility, and light shielding property of the composite material are improved by containing aluminum. In the composite material of the present invention containing a resin particle, the processability of the composite material can be further enhanced by adjusting the content of the aluminum to a level within this range, and a lump of aluminum becomes harder to be formed during processing of the composite material. This aluminum can be derived from an aluminum thin film layer of polyethylene laminated paper as a raw material. In the aluminum thin film layer of the polyethylene laminated paper, aluminum is not melted during melt-kneading, but is gradually sheared and micronized by shear force during kneading.
When thermal conductivity, flame retardancy, and the like are considered in addition to the viewpoint of the processability, the content of the aluminum in the composite material of the present invention is preferably 5% by mass or more and 30% by mass or less, and more preferably 5% by mass or more and 20% by mass or less.
The composite material of the present invention preferably contains an aluminum dispersoid having an X-Y maximum length of 0.005 mm or more. The proportion of the number of aluminum dispersoids having an X-Y maximum length of 3 mm or more in the number of aluminum dispersoids having an X-Y maximum length of 0.005 mm or more is preferably less than 10%. The processability of the composite material can be further enhanced by adjusting this proportion to a level less than 10%, the lump of aluminum becomes harder to be formed during processing of the composite material.

The X-Y maximum length is determined by observing the surface of the composite material. In this observation surface, a longer length of an X-axis maximum length and a Y-axis maximum length is taken as the X-Y maximum length by randomly drawing a straight line in a specific direction (X-axis direction) relative to the aluminum dispersoid to measure the maximum distance (X-axis maximum length) between two intersection points where the straight line intersects with the outer periphery of the aluminum dispersoid, and drawing another straight line in a direction (Y-axis direction) perpendicular to the specific direction to measure the maximum distance (Y-axis maximum length) between two intersection points where the Y-axis direction line intersects with the outer periphery of the aluminum dispersoid. The X-Y maximum length can be determined using image analysis software as described in Examples mentioned later.

In the aluminum dispersoid dispersed in the composite material of the present invention, the average of the X-Y maximum lengths of individual aluminum dispersoids is preferably 0.02 to 2 mm, and more preferably 0.04 to 1 mm. The average of the X-Y maximum length is taken as the average of the X-Y maximum lengths measured by using the image analysis software as described later.

At least a part of the above matrix resin, resin particle, cellulose fiber, and the like which can constitute the composite material of the present invention can be derived from a recycled material. Also, at least a part of the aluminum which can be contained in the composite material of the present invention can also be derived from a recycled material. The production cost of the composite material can be suppressed by utilizing the recycled material.

Examples of the recycled material include polyolefin resin laminated paper having paper and a polyolefin thin film layer, polyolefin resin laminated paper having paper, a polyolefin thin film layer, and an aluminum thin film layer, and a beverage pack and/or food pack formed by using these laminated papers. In the present invention, the "thin film" means a film (sheet) having a thickness of preferably 2 mm or less, and more preferably 1 mm or less in a dried state. The "thin film" may have a thickness of 500 $\mu$m or less, 200 $\mu$m or less, or 100 $\mu$m or less in a dried state.

Further, waste paper and the like can be used as a supply source of the cellulose fiber, and recycled resin and the like can be used as a supply source of the matrix resin and the resin particle.

The above beverage pack and food pack may be those before use, a recovered material after use, or broken paper of polyolefin laminated paper and the like discharged in the production step of the beverage pack and food pack, or a combination thereof.

Also, a polyolefin thin film piece to which the cellulose fiber is adhered, obtained by processing the above laminated paper and/or beverage/food pack by a pulper to strip off and remove a paper portion (hereinafter, referred to as "cellulose fiber-adhering polyolefin thin film piece" and in the "cellulose fiber-adhering polyolefin thin film piece, a thin film piece obtained by processing polyethylene laminated paper having an aluminum thin film layer by a pulper is also referred to as "cellulose fiber-aluminum-adhering polyolefin thin film piece") can also be used as the recycled material.

A sheet of a resin different from the polyolefin resin (resin sheet corresponding to the resin particle) or a laminate having a polyolefin resin sheet and a sheet of a resin different from the polyolefin resin (resin sheet corresponding to the resin particle) can also be used as a recycled material. Further, a laminate having a structure in which an aluminum thin film sheet is laminated on this laminate can be used as a recycled material. A pulverized material thereof and the like can also be used. A packaging material such as a food pack and the like of a laminate structure having a polyolefin resin sheet and a sheet of a resin different from the polyolefin resin (resin sheet corresponding to the resin particle) can also be used as a recycled material.

The proportion of components derived from the recycled material in the composite material of the present invention is preferably 10% by mass or more, more preferably 20% by mass or more, even more preferably 30% by weight or more, and even more preferably 40% by weight or more based on the dry mass.

Also in a case where such a recycled material is used as a raw material, the composite material of the present invention having desired physical properties can be obtained by, for example, melt-kneading described later.

The composite material of the present invention may contain an inorganic material. Flexural modulus, impact resistance, and flame retardancy can be improved by containing the inorganic material. Examples of the inorganic material include calcium carbonate, talc, clay, magnesium oxide, aluminum hydroxide, magnesium hydroxide, and titanium oxide.

The composite material of the present invention may contain a flame retardant, an antioxidant, a stabilizer, a weathering agent, a compatibilizer, an impact improver, a modifier, or the like according to the purpose. The composite material of the present invention can contain an oil component or various types of additives for improving processability. Examples thereof include paraffin, modified polyethylene wax, stearate, hydroxy stearate, a vinylidene fluoride-based copolymer such as a vinylidene fluoride-hexafluoropropylene copolymer, and organic modified siloxane.

The composite material of the present invention can also contain carbon black, various pigments and dyes. The composite material of the present invention can contain a metallic luster colorant. The composite material of the present invention can also contain an electrical conductivity-imparting component such as electrically conductive carbon black. Further, the composite material of the present invention can also contain a thermal conductivity-imparting component.

The composite material of the present invention may be crosslinked. Examples of the crosslinking agent include organic peroxide, and specific examples include dicumyl peroxide. The composite material of the present invention may be in a crosslinked form by a silane crosslinking method.

The shape of the composite material of the present invention is not particularly limited. For example, the composite material of the present invention may be formed into a pellet form, or may also be formed into a desired shape. When the composite material of the present invention is in the form of pellets, this pellet is suitable as a material for forming a formed article (resin product).

The composite material of the present invention can also be used as a modified masterbatch containing the resin particle and the cellulose fiber for a polyolefin resin such as high density polyethylene and polypropylene.

In the composite material of the present invention, the moisture content is preferably less than 1% by mass.

Subsequently, with regard to the production method for the composite material of the present invention, a preferable embodiment will be described below, but the composite material of the present invention is not limited to the material obtained by the method described below.

An example of the method of producing a composite material of the present invention includes melt-kneading at least a polyolefin resin, a cellulose fiber, the above resin sheet introducing a resin particle (in the present invention, when simply referred to "resin sheet", it means a sheet containing a resin different from the polyolefin resin, preferably a sheet formed by using a resin different from the polyolefin resin) at a temperature at which the polyolefin resin is melted (that is, a temperature equal to or more than the melting point of the polyolefin resin) and the resin sheet is not melted (that is, a temperature less than the melting point of the resin of the resin sheet), to obtain a resin composite material formed by dispersing the cellulose fiber and the resin particle in the polyolefin resin. By melt-kneading under the above temperature condition, deterioration of the cellulose fiber can be prevented, and formation of a dispersion state of the resin particle with a desired shape also becomes possible. The melt-kneading temperature is ordinarily 140 to 220°C, and also preferably 150 to 200°C.

The resin constituting the resin sheet is a resin of the above resin particle, and the preferred form thereof is as described above. In the production method of the composite material of the present invention, the resin sheet becomes the resin particle in the obtained composite material. The resin sheet is used as is, and may also be made into a resin particle by forming the resin sheet into small pieces by melt-kneading. Also, the resin sheet may be made into a cut material or a pulverized material of the resin sheet having a certain size in advance, and then subjected to melt-kneading. In the method of producing the composite material of the present invention, it is preferable that the resin sheet is not actively melted by kneading under the above temperature condition.

As a common supply source of polyolefin resin and the above resin sheet, a laminate having a polyolefin resin sheet and the above resin sheet can be used. In this case, in addition to the laminate, a polyolefin resin, the above resin sheet, and the like which are not derived from the laminate may also be blended.

Another preferred mode of the production method of the composite material of the present invention includes, for example, melt-kneading at least a polyolefin resin, a cellulose fiber, the above resin particle whose size has been adjusted in advance at a temperature at which the polyolefin resin is melted (that is, a temperature equal to or more than the melting point of the polyolefin resin) and the resin particle is not melted (that is, a temperature less than the melting point of the resin particle), to obtain a resin composite material formed by dispersing the cellulose fiber and the resin particle in the polyolefin resin. By melt-kneading under the above temperature condition, deterioration of the cellulose fiber can be prevented, and formation of a dispersion state of the resin particle with a desired size also becomes possible.

As a supply source of the cellulose fiber, a material containing cellulose as a main component can be used as a raw material. Specific examples thereof include pulp, paper, waste paper, paper powder, regenerated pulp, paper sludge, laminated paper, broken paper of laminated paper, a resin thin film piece to which a cellulose fiber is adhered, obtained by removing a certain amount of a paper component from laminated paper, and other cellulose fibers derived from a plant. In addition to the cellulose fiber, the paper and waste paper may contain a filler (kaolin or talc, for example) generally contained in order to enhance the whiteness of the paper, and a sizing agent, and the like.

Here, the sizing agent is an additive to be added for the purpose of suppressing permeability of liquid such as ink into the paper, preventing set-off or blurring, and providing the paper with a certain degree of water proofness. Examples of a main agent thereof include rosin soap, alkylketene dimer, alkenyl succinic anhydride, and polyvinyl alcohol. Examples of a surface sizing agent include oxidized starch, a styrene-acryl copolymer, and a styrene-methacryl copolymer. Further, the paper, waste paper, or the like may contain various types of additives, an ink component, lignin, and the like, in addition to the above components.

The laminated paper may contain a polyolefin resin, a cellulose fiber, a filler (kaolin or talc, for example) generally contained in order to enhance the whiteness of the paper, a sizing agent, and the like.

The pulp includes mechanical pulps and chemical pulps, and the mechanical pulp contains lignin and contaminants. Meanwhile, the chemical pulp hardly contains lignin, but contains contaminants other than lignin in some cases.

As a common supply source of the polyolefin resin and the cellulose fiber, polyolefin resin laminated paper and/or a cellulose fiber-adhering polyolefin thin film piece can also be used. In this case, a polyolefin resin, a cellulose fiber, and the like which are not derived from these may be blended.

In the production method of the composite material of the present invention, an aluminum thin film sheet can be mixed in the above melt-kneading. With this, a resin composite material formed by dispersing a cellulose fiber, a resin particle, and aluminum in a polyolefin resin can be obtained. In this case, as a supply source of the polyolefin resin, the resin sheet, and the aluminum thin film sheet, a laminate having a polyolefin resin sheet, the resin sheet and an aluminum thin film sheet can be used. In this case, a polyolefin resin, the above resin sheet, and the aluminum thin film sheet, and the like which are not derived from the laminate may be blended in addition to the laminate. For example, as a common supply source of the polyolefin resin, the cellulose fiber, and the aluminum thin film sheet, polyolefin resin laminated paper having an aluminum thin film layer and/or a cellulose fiber-aluminum-adhering polyolefin thin film piece can also be used. In this case, a polyolefin resin, a cellulose fiber, aluminum, and the like which are not derived from these may also be blended.

In the production method of the present invention, melt-kneading can also be performed by blending water. Blending of water affects the characteristics and physical properties of the composite material, and also contributes to, for example, generation of a desired composite material in which resin particles with a desired shape are homogeneously dispersed. Meanwhile, even when water is blended, melt-kneading is performed at a temperature at which the resin of the resin sheet is not melted. Therefore, the influence on the physical properties of the resin sheet and the resin itself constituting the resin particle is small. For example, it is less likely to cause hydrolysis or the like.

The formed body of the present invention is a formed body formed by forming the composite material of the present invention into a desired shape. Examples of the formed body of the present invention include formed bodies of various structures such as a sheet shape, a plate shape, and a tubular (annular) shape. Examples of the tubular formed body include a straight tube with a cross section of a substantially cylindrical shape or a square shape, a curved tube, a corrugated tube to which a corrugated shape is imparted. Examples of the tubular formed body also include divided bodies obtained by dividing the tubular formed body such as the straight tube with a cross section of a substantially cylindrical shape or a square shape, the curved tube, the corrugated tube to which a corrugated shape is imparted into two pieces, for example. The formed body of the present invention can also be used as a joint member for the tube as well as members for civil engineering, building materials, automobiles, or protection of electrical cables. The formed body of the present invention can be obtained by subjecting the composite material of the present invention to ordinary forming means such as injection molding, extrusion molding, press molding, and blow molding.

The formed body of the present invention is formed by dispersing a resin particle with a specific form in a polyethylene resin, is excellent in mechanical properties, and can be utilized for various purpose. The formed body of the present invention is suitable as, for example, a material or a constituent member for civil engineering, a building material, or an automobile.

EXAMPLES

The present invention will be described in more detail based on examples given below, but the invention is not meant to be limited by these. First, a measurement method and an evaluation method for each indicator in the present invention will be described.

[Shape of resulting material (resin composite material)]

The appearance of the resin composite material obtained by melt-kneading was visually evaluated. A material in a state of being a bulk (mass) was evaluated as an acceptable product (○); a material in which a state of being a bulk (mass) and a particulate body in a state of not being kneaded (a material which was not combined by melt-kneading) are mixed was evaluated as (△); and a particulate body in a state of not being kneaded was evaluated as (×).

[Content of cellulose in composite material (cellulose effective mass ratio)]

A composite material sample (10 mg) which has been dried in advance under the atmosphere at 80°C × 1 hour was subjected to a thermogravimetric analysis (TGA) from 23°C to 400°C under a nitrogen atmosphere at a heating rate of +10°C/min. Then, the content of cellulose fiber (% by mass) was calculated by the following [Formula I]. The same five composite material samples were prepared, and the thermogravimetric analysis was performed for each of the composite material samples in the same manner as described above. The average value of five calculated values of the contents (% by mass) of the cellulose fibers was obtained, and the average value was taken as the content (% by mass) of the cellulose fiber.

[Formula I] (content of cellulose fiber [% by mass]) = (amount of mass reduction of composite material sample at 200 to 380°C [mg]) × 100/(mass of composite material sample in dried state before thermogravimetric analysis [mg])

[Formability]

A case where formation could be performed by injection molding without any problem was evaluated as ○; and a case where slight clogging occurred in the nozzle, but formation could be performed was evaluated as △.

[Tensile strength]

A test piece was prepared by injection molding, and tensile strength was measured for a No. 2 test piece in accordance with JIS K 7113. A unit is MPa. A tensile strength of 20 MPa or more was evaluated as ○; a tensile strength of 12 MPa or more and less than 20 MPa was evaluated as △; and a tensile strength of less than 12 MPa was evaluated as ×. ○ and △ are acceptable.

[Impact resistance]

A test piece (thickness: 4 mm, width: 10 mm, and length: 80 mm) was prepared by injection molding, and Izod impact strength was measured using a notched test piece in accordance with JIS K 7110. A unit of the impact resistance is $kJ/m^2$. An impact resistance of 6.5 $kJ/m^2$ or more was evaluated as ○; an impact resistance of 5.6 $kJ/m^2$ or more and less than 6.5 $kJ/m^2$ was evaluated as △; and an impact resistance of less than 5.6 $kJ/m^2$ was evaluated as ×. ○ and △ are acceptable.

[Flexural modulus]

Using a composite material, flexural modulus was measured for a 4 mm-thick sample at a flexural rate of 2 mm/min in accordance with JIS K 7171 2016. More specifically, a test piece (thickness: 4 mm, width: 10 mm, and length: 80 mm) was prepared by injection molding, a load was applied to the test piece with a span of 64 mm, a curvature radius of 5 mm at a supporting point and an action point, and a test speed of 2 mm/min, and a flexural test was conducted in accordance with JIS K 7171 2016, and flexural modulus (MPa) was determined.

Here, the flexural modulus Ef can be determined by determining flexural stress of1 measured at a deflection amount in strain 0.0005 ($\varepsilon$f1) and flexural stress $\sigma$f2 measured at a deflection amount in strain 0.0025 ($\varepsilon$f2), and dividing a difference therebetween by a difference between respective amounts of strain corresponding thereto, namely, according to the following formula: Ef = ($\sigma$f2-$\sigma$f1)/($\varepsilon$f2- $\varepsilon$f1).

In this case, the deflection amount S for determining the flexural stress can be determined according to the following formula:

$$S = (\varepsilon \cdot L^2)/(6 \cdot h)$$

S is deflection,
$\varepsilon$ is flexural strain,
L is span, and
h is thickness.

A flexural modulus of 900 MPa or more was evaluated as ⊙; a flexural modulus of 300 MPa or more and less than 900 MPa was evaluated as ○; a flexural modulus of 200 MPa or more and less than 300 MPa was evaluated as △; and a flexural modulus of less than 200 Ma was evaluated as ×.

[Particle size distribution of aluminum (judgment of aluminum length)]

A composite material was pressed (press pressure 4.2 MPa) to obtain a 1 mm-thick sheet-shaped formed body. The proportion (%) of the number of aluminum dispersoids having an X-Y maximum length of 3 mm or more in the number of aluminum dispersoids having an X-Y maximum length of 0.005 mm or more was determined by photographing an enlarged photograph of a surface of this formed body by using a microscope, and determining, on an aluminum dispersoid existing in the range of 5.1 mm x 4.2 mm, a distribution of X-Y maximum length thereof by using image analysis software. A case where the proportion of aluminum having an X-Y maximum length of 3 mm or more is less than 10% was evaluated as (○), and a case other than (○) (10% or more) was evaluated as (△). As the image analysis software, "Simple image dimension measuring software Pixs2000_Pro" (manufactured by INNOTECH CORPORATION) was used.

[Judgment of maximum diameter of resin particle]

A composite material was pressed (press pressure 4.2 MPa) to obtain a 6 mm-thick formed body. The vertical cross section of this formed body (cross section in the 6 mm-thick direction) was measured as an observation surface by the method described above. A case where the average of the maximum diameters of ten resin particles is 400 $\mu$m or more and less than 4 mm was evaluated as ○; a case where the average of the maximum diameters of ten resin particles is 10 $\mu$m or more and less than 400 $\mu$m, or 4 mm or more was evaluated as △; and a case where the average of the maximum diameters of ten resin particles is less than 10 $\mu$m was evaluated as x.

[Judgment of aspect ratio of resin particle]

A composite material was pressed (press pressure 4.2 MPa) to obtain a 6 mm-thick formed body. The vertical cross section of this formed body was measured as an observation surface by the method described above. A case where the average of the aspect ratios of ten resin particles is 30 or more was evaluated as ○; a case where the average of the aspect ratios of ten resin particles is 5 or more and less than 30 was evaluated as △; and a case where the average of the aspect ratios of ten resin particles is less than 5 was evaluated as $\times$

[Cellulose fiber length]

0.1 to 1 g of a composite material formed in a sheet form was cut out, and used as a sample. This sample was wrapped with a 400-mesh stainless steel mesh, and immersed into 100 mL xylene at 138°C for 24 hours. Next, the sample was pulled up therefrom, and then the sample was dried in vacuum at 80°C for 24 hours. Then, 0.1 g of the dry sample was well dispersed into 50 mL of ethanol, added dropwise to a petri dish, and a part in the range of 15 mm $\times$ 12 mm was observed with a microscope. A case where a cellulose fiber having a fiber length of 0.3 mm or more was observed and a cellulose fiber having a fiber length of 0.8 mm or more was not observed was evaluated as (○); a case where a cellulose fiber having a fiber length of 0.8 mm or more was observed was evaluated as (◎); and a case where a cellulose fiber having a fiber length of 0.3 mm or more was not observed was evaluated as (△).

<Example 1>

A cellulose fiber-aluminum-adhering polyethylene thin film piece (Cel-Al-adhering PE thin film piece) was obtained by stripping off and removing, by a pulper, a paper portion from a recovered material of a beverage container formed by using polyethylene laminated paper having paper, a polyethylene thin film layer, and an aluminum thin film layer. This thin film piece was cut into small pieces having various shapes and sizes of about several cm$^2$ to 100 cm$^2$, and was in a wet state by being immersed into water in a step of stripping off the paper portion. The polyethylene constituting this Cel-Al-adhering PE thin film piece is a low density polyethylene.

Meanwhile, as a laminate containing a polyethylene terephthalate (PET) layer, a pulverized material containing a PET layer was obtained by using a packaging pack material having a laminate structure including polyolefin layers (low density polyethylene layer, two polyolefin layers are combined, thickness: 70 $\mu$m) on both sides of a laminate of a PET layer (12 $\mu$m) and an aluminum deposited layer, and pulverizing this by a rotary cutter mill. As a mesh of the pulverizer, the hole diameter shown in Table 1 was used.

Next, the Cel-Al-adhering PE thin film piece and the pulverized material containing a PET layer were charged into a kneader which is a batch type kneading device at the blend ratio shown in the upper rows in Table 1 (parts by mass based on the dry mass) and melt-kneaded at the maximum arrival temperature as shown in the following Table 1, to obtain a resin composite material (moisture content: 1% by mass or less). The content of the cellulose fiber in the composite material (% by mass), the content of the aluminum (% by mass), and the content of the PET in the composite material calculated from the blend amount (% by mass) are shown in the middle rows in Table 1.

The evaluation results of the composite material are shown in Table 1.

<Examples 2 and 3>

A resin composite material (moisture content: 1% by mass or less) was each obtained in the same manner as in Example 1 except for changing the blend ratio of the Cel-Al-adhering PE thin film piece and the pulverized material containing a PET layer to the blend ratio as shown in Table 1.

<Examples 4 and 6>

A resin composite material (moisture content: 1% by mass or less) was each obtained in the same manner as in Example 2 except for changing the pulverization diameter (mesh hole diameter of the pulverizer) during pulverizing the packaging pack material containing a PET layer to the pulverization diameter as shown in Table 1.

<Example 5>

A pulverized material containing a PET layer was obtained by pulverizing a tape having a PET layer and an aluminum layer by a rotary cutter mill.
This pulverized material containing a PET layer, low density polyethylene (manufactured by Japan Polyethylene Corporation, trade name: LC600A, shown as PE in the following Table), and pulp 1 (manufactured by J. RETTENMAIER & SOHNE, trade name: ACRBOEL FIF400) were blended at the blend ratio shown in Table 1, then charged into a kneader which is a batch type kneading device, and melt-kneaded at the maximum arrival temperature as shown in the following Table 1 to obtain a resin composite material (moisture content: 1% by mass or less).

<Example 7>

A resin composite material (moisture content: 1% by mass or less) was obtained in the same manner as in Example 2 except for using a batch type closed kneading device having a pressure retaining capacity in place of the kneader and performing melt-kneading while bringing water into a subcritical state by high-speed stirring.

<Example 8>

A resin composite material (moisture content: 1% by mass or less) was obtained in the same manner as in Example 5 except for using pulp 2 (manufactured by J. RETTENMAIER & SOHNE, trade name: ACRBOEL BE600) in place of pulp 1.
Each of the composite materials of the Examples all contained resin particles having a bent structure in the composite material.

<Example 9>

As a laminate containing a PET layer, a pulverized material containing a PET layer was obtained by using a packaging pack material having a laminate structure including a PET layer (12 $\mu$m) and an aluminum deposited layer laminated, and polyolefin layers (low density polyethylene layer, total thickness of the polyolefin layers: 70 $\mu$m) on both sides thereof, and pulverizing this by a rotary cutter mill.
This pulverized material containing a PET layer and low density polyethylene (manufactured by Japan Polyethylene Corporation, trade name: LC600A, shown as PE in the following table) were blended at the blend ratio shown in Table 1, then charged into a kneader which is a batch type kneading device, and melt-kneaded at the maximum arrival temperature as shown in Table 1. A resin composite material (moisture content: 1% by mass or less) containing no cellulose fiber was thus obtained.

<Example 10>

A pulverized material of PET was obtained by pulverizing a PET sheet (thickness: 20 $\mu$m) by a rotary cutter mill (mesh diameter of the pulverizer: 5 mm). This pulverized material of the PET sheet and low density polyethylene (manufactured by Japan Polyethylene Corporation, trade name: LC600A) were blended at the blend ratio shown in Table 1, then charged into a kneader which is a batch type kneading device, and melt-kneaded at the maximum arrival temperature as shown in Table 1 to obtain a resin composite material (moisture content: 1% by mass or less).

<Comparative Example 1>

A Cel-Al-adhering PE thin film piece was obtained in the same manner as in Example 1. This Cel-Al-adhering PE thin film piece was charged into a kneader which is a batch type kneading device and melt-kneaded at the maximum arrival temperature as shown in Table 1 to obtain a resin composite material (moisture content: 1% by mass or less).

<Comparative Example 2>

A resin composite material was obtained in the same manner as in Example 1 except for using a material obtained by pulverizing a PET sheet (thickness: 20 $\mu$m) by a rotary cutter mill (mesh diameter of the pulverizer: 5 mm) in place of the pulverized material containing a PET layer, and setting the blend amounts of raw materials to the amounts as shown in Table 1.

<Comparative Example 3>

A resin composite material was obtained in the same manner as in Example 2 except for setting the maximum arrival temperature for the melt-kneading to the temperature as shown in Table 1.

<Comparative Example 4>

Low density polyethylene (manufactured by Japan Polyethylene Corporation, trade name: LC600A) and PET pellets (particle size: 1 mm) were blended at the blend ratio shown in Table 1, then charged into a kneader which is a batch type kneading device, and melt-kneaded at the maximum arrival temperature as shown in Table 1 to obtain a resin composite material (moisture content: 1% by mass or less).

[Table 1]

Table 1

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Low density PE (parts by mass) | | | | | 50 | | | 50 |
| Pulp 1 (parts by mass) | | | | | 30 | | | |
| Pulp 2 (parts by mass) | | | | | | | | 30 |
| Cel-Al-adhering PE thin film piece (parts by mass) | 90 | 80 | 60 | 80 | | 80 | 80 | |
| Pulverized material containing PET layer (parts by mass) | 10 | 20 | 40 | 20 | 20 | 20 | 20 | 20 |
| PET pellet (parts by mass) | | | | | | | | |
| PET sheet pulverized material (parts by mass) | | | | | | | | |
| Mesh diameter of pulverization (mm) | 5 | 5 | 5 | 2 | 5 | 15 | 5 | 5 |
| Maximum arrival temperature during kneading (°C) | 170 | 170 | 170 | 170 | 170 | 170 | Subcritical | 170 |
| Cellulose fiber content in composite material (% by mass) | 28.7 | 25.8 | 19.7 | 25.4 | 23.6 | 25.5 | 26.1 | 22.9 |
| PET content in composite material (% by mass) | 2 | 4 | 8 | 4 | 4 | 4 | 4 | 4 |
| Aluminum content in composite material (% by mass) | 10.6 | 9.4 | 7.1 | 9.5 | 0.2 or less | 9.2 | 8.9 | 0.2 or less |
| Maximum diameter of resin particle (PET) (mm, average of ten resin particles) | 1.8 | 1.8 | 1.8 | 0.9 | 1.8 | 5.2 | 0.3 | 1.8 |
| Aspect ratio of resin particle (PET) (Average of ten resin particles) | 150 | 150 | 150 | 75 | 150 | 433 | 25 | 150 |
| Judgment of maximum diameter of resin particle | ○ | ○ | ○ | ○ | ○ | △ | △ | ○ |
| Judgment of aspect ratio of resin particle | ○ | ○ | ○ | ○ | ○ | ○ | △ | ○ |
| Shape of resulting material (composite material) | ○ | ○ | ○ | ○ | ○ | ○ | ○ | ○ |
| Formability | ○ | ○ | ○ | ○ | ○ | △ | ○ | ○ |
| Tensile strength (MPa) | ○ | ○ | ○ | ○ | ○ | ○ | ○ | △ |
| Impact resistance | ○ | ○ | ○ | ○ | ○ | ○ | △ | ○ |
| Flexural modulus | ◉ | ◉ | ◉ | ◉ | ◉ | ◉ | ◉ | ◉ |
| Cellulose fiber length | ◉ | ◉ | ◉ | ◉ | ◉ | ◉ | ◉ | ○ |
| Judgment of aluminum length | ○ | ○ | ○ | ○ | ○ | △ | ○ | ○ |

Remarks: 'Ex.' means Example according to this invention.

Table 1 (continued)

| | Ex. 9 | Ex. 10 | CEx. 1 | CEx. 2 | CEx. 3 | CEx. 4 |
|---|---|---|---|---|---|---|
| Low density PE (parts by mass) | 70 | 90 | | | | 90 |
| Pulp 1 (parts by mass) | | | | | | |
| Pulp 2 (parts by mass) | | | | | | |
| Cel-Al-adhering PE thin film piece (parts by mass) | | | 100 | 20 | 80 | |
| Pulverized material containing PET layer (parts by mass) | 30 | | | | 20 | |
| PET pellet (parts by mass) | | | | | | 10 |
| PET sheet pulverized material (parts by mass) | | 10 | | 80 | | |
| Mesh diameter of pulverization (mm) | 5 | 5 | 5 | 5 | 5 | - |
| Maximum arrival temperature during kneading (°C) | 170 | 170 | 170 | 170 | 280 | 170 |
| Cellulose fiber content in composite material (% by mass) | Not contain | Not contain | 30.7 | - | 24.1 | Not contain |
| PET content in composite material (% by mass) | 6 | 10 | Not contain | - | 4 | 10 |
| Aluminum content in composite material (% by mass) | 0.2 or less | Not contain | 11.5 | - | 9.5 | Not contain |
| Maximum diameter of resin particle (PET) (mm, average of ten resin particles) | 1.8 | 1.9 | - | - | Particle absent | 1.3 |
| Aspect ratio of resin particle (PET) (Average of ten resin particles) | 150 | 95 | - | - | Particle absent | 1.4 |
| Judgment of maximum diameter of resin particle | ○ | ○ | - | - | - | ○ |
| Judgment of aspect ratio of resin particle | ○ | ○ | - | - | - | × |
| Shape of resulting material (composite material) | ○ | ○ | ○ | × | ○ | Δ |
| Formability | ○ | ○ | ○ | - | ○ | Δ |
| Tensile strength (MPa) | Δ | Δ | ○ | - | ○ | × |
| Impact resistance | ○ | ○ | × | - | × | × |
| Flexural modulus | Δ | Δ | ○ | - | ○ | × |
| Cellulose fiber length | - | - | ◉ | - | ◉ | - |
| Judgment of aluminum length | ○ | - | ○ | - | ○ | - |

Remarks: 'Ex.' means Example according to this invention, and 'CEx.' means Comparative Example.

As shown in the above Table 1, Comparative Example 4, which did not contain a cellulose fiber nor a resin particle with a specific shape (the aspect ratio of the resin particle was less than 5), results in low flexural modulus, tensile strength, and impact resistance. Further, the composite material of Comparative Example 1, which did not have a resin particle, results in inferior impact resistance.

Further, when the blend amount of a resin other than polyolefin resin is too large, a desired composite material (homogeneous kneaded product) was not obtained (Comparative Example 2).

Further, the composite material of Comparative Example 3, which was obtained by melt-kneading at high temperature such that no resin particle was left, results in inferior impact resistance. It is conceived that this is affected by, for example, the fact that a reinforcing action provided by the resin particle could not be sufficiently obtained.

In contrast, the composite materials of Examples 1 to 10 defined in the present invention had sufficient formability and excellent impact resistance. The composite materials of Examples 1 to 8 defined in the present invention, which was formed by dispersing a cellulose fiber and a specific resin particle, had sufficient formability and excellent flexural modulus and impact resistance. Among these, the composite materials of Examples 1 to 6 and 8, in which the resin particle had a specific aspect ratio, achieved both flexural modulus and impact resistance at a high level. Further, the composite materials of Examples 1 to 6, which had a cellulose fiber with a specific fiber length, had tensile strength, flexural modulus, and impact resistance all together at a high level.

<Example 11>

A material obtained by pulverizing broken paper of polyethylene laminated paper (having paper, a polyethylene thin film layer, and an aluminum thin film layer) by using a rotary cutter mill (manufactured by Horai Co., Ltd., mesh diameter: 15 mm), low density polyethylene (manufactured by Japan Polyethylene Corporation, trade name: LC600A), and a material obtained by pulverizing a PET bottle by a rotary cutter mill (manufactured by Horai Co., Ltd., mesh diameter: 3 mm) were mixed at the blend ratio shown in the upper rows in Table 2 and melt-kneaded by using a kneader by adding 20 parts by mass of water to obtain a composite material. The maximum arrival temperature during kneading was 170°C. The resin composite material of Example 11 was thus obtained.

<Examples 12 and 13, and Comparative Example 5>

A resin composite material was each obtained in the same manner as in Example 11 except for changing blending of raw materials to that as shown in the upper rows in Table 2.

<Example 14>

Low density polyethylene (manufactured by Japan Polyethylene Corporation, trade name: LC600A) and a material obtained by pulverizing a PET bottle by using a rotary cutter mill (manufactured by Horai Co., Ltd., mesh diameter: 3 mm) were mixed at the blend ratio shown in the upper rows in Table 2 and melt-kneaded by using a kneader to obtain a composite material. The maximum arrival temperature during kneading was 170°C. The resin composite material of Example 14 was thus obtained.

<Example 15>

A pulverized material of PET was obtained by pulverizing a PET sheet (thickness: 50 $\mu$m) by a rotary cutter mill (mesh diameter of the pulverizer: 5 mm). This pulverized material of the PET sheet, a material obtained by pulverizing broken paper of polyethylene laminated paper (having paper, a polyethylene thin film layer, and an aluminum thin film layer) by using a rotary cutter mill (manufactured by Horai Co., Ltd., mesh diameter: 15 mm), and low density polyethylene (manufactured by Japan Polyethylene Corporation, trade name: LC600A) were mixed at the blend ratio shown in the upper rows in Table 2 and melt-kneaded by using a kneader by adding 20 parts by mass of water to obtain a resin composite material. The maximum arrival temperature during kneading was 170°C. The resin composite material of Example 15 was thus obtained.

<Example 16>

A material obtained by pulverizing broken paper of polyethylene laminated paper (having paper, a polyethylene thin film layer, and an aluminum thin film layer) by using a rotary cutter mill (manufactured by Horai Co., Ltd., mesh diameter: 15 mm), high density polyethylene 1 (manufactured by Japan Polyethylene Corporation, trade name: NOVATEC HJ490), acid-modified polyethylene 1 (maleic acid-modified polyethylene, manufactured by DuPont de Nemours, Inc., trade name: FUSABOND), and a material obtained by pulverizing a PET bottle by using a rotary cutter mill (manufactured by Horai Co., Ltd., mesh diameter: 3 mm) were mixed at the blend ratio shown in the upper rows in Table 2 and melt-kneaded by using a kneader by adding 20 parts by mass of water to obtain a resin composite material. The maximum arrival temperature during kneading was 170°C. The resin composite material of Example 16 was thus obtained.

<Examples 17 and 18, and Comparative Examples 6 and 8>

A composite material was obtained in the same manner as in Example 16 except for changing blending of raw materials to that as shown in the upper rows in Table 2.

<Example 19>

A material obtained by pulverizing broken paper of polyethylene laminated paper (having paper, a polyethylene thin film layer, and an aluminum thin film layer) by using a rotary cutter mill (manufactured by Horai Co., Ltd., mesh diameter: 15 mm), high density polyethylene 1 (manufactured by Japan Polyethylene Corporation, trade name: NOVATEC HJ490), acid-modified polyethylene 1 (maleic acid-modified polyethylene, manufactured by DuPont de Nemours, Inc., trade name: FUSABOND), and PET pellets (particle size: 1 mm) were mixed at the blend ratio shown in the upper rows in Table 2 and melt-kneaded by using a kneader by adding 20 parts by mass of water to obtain a resin composite material. The maximum arrival temperature during kneading was 170°C. The resin composite material of Example 19 was thus obtained.

<Example 20>

A material obtained by pulverizing broken paper of polyethylene laminated paper (having paper, a polyethylene thin film layer, and an aluminum thin film layer) by using a rotary cutter mill (manufactured by Horai Co., Ltd., mesh diameter: 15 mm), high density polyethylene 1 (manufactured by Japan Polyethylene Corporation, trade name: NOVATEC HJ490), an ethylene-vinyl acetate copolymer (EVA), and a material obtained by pulverizing a PET bottle by using a rotary cutter mill (manufactured by Horai Co., Ltd., mesh diameter: 3 mm) were mixed at the blend ratio shown in the upper rows in Table 2 and melt-kneaded by using a kneader by adding 20 parts by mass of water to obtain a resin composite material. The maximum arrival temperature during kneading was 190°C. The resin composite material of Example 20 was thus obtained.

<Comparative Example 7>

High density polyethylene 1 (manufactured by Japan Polyethylene Corporation, NOVATEC HJ490), acid-modified polyethylene 1 (maleic acid-modified polyethylene, manufactured by DuPont de Nemours, Inc., trade name: FUSABOND), and PET pellets (particle size: 1 mm) were mixed at the blend ratio shown in the upper rows in Table 2 and melt-kneaded by using a kneader to obtain a resin composite material. The maximum arrival temperature during kneading was 170°C. The resin composite material of Comparative Example 7 was thus obtained.

Differential scanning calorimetry (DSC) was performed for the pulverized material of the PET bottle used in Examples, and the pulverized material exhibited an endothermic peak around 250°C.

Further, the composite material of Example 12 was immersed in hot xylene at 138°C to dissolve and remove the low density polyethylene resin of the matrix, thus obtaining a residue of the insoluble components. This residue was stirred in water, and liquid of an upper part where cellulose fibers were floating was removed, thus recovering resin particles and aluminum particles which have precipitated in a relatively early stage. This recovered material was dried, and resin particles were collected according to the color. These resin particles contained scale-shaped, small sheet-shaped, or plate-shaped particles. Differential scanning calorimetry (DSC) was performed for these resin particles, and the particles exhibited an endothermic peak around 250°C. Incidentally, infrared absorption analysis was performed for these resin particles, these particles exhibited an absorption spectrum specific to PET.

[Table 2]

Table 2

| | Ex. 11 | Ex. 12 | Ex. 13 | Ex. 14 | Ex. 15 | Ex. 16 | Ex. 17 |
|---|---|---|---|---|---|---|---|
| Low density PE (parts by mass) | 59 | 58 | 55 | 98 | 59 | | |
| High density PE (parts by mass) | | | | | | 54 | 44 |
| Maleic acid-modified PE | | | | | | 4 | 4 |
| EVA | | | | | | | |
| Pulverized material of laminated paper (parts by mass) | 40 | 40 | 40 | | 40 | 40 | 50 |
| PET pellet (parts by mass) | | | | | | | |
| Pulverized material of PET sheet (parts by mass) | | | | | 1 | | |
| Pulverized material of PET bottle (parts by mass) | 1 | 2 | 5 | 2 | | 2 | 2 |
| Cellulose fiber content in composite material (% by mass) | 19.2 | 19.0 | 19.4 | Not contain | 18.9 | 18.7 | 23.6 |
| PET content in composite material (% by mass) | 1 | 2 | 5 | 2 | 1 | 2 | 2 |
| Aluminum content in composite material (% by mass) | 7.4 | 7.1 | 7.3 | Not contain | 7.2 | 7.1 | 9.1 |
| Maximum diameter of resin particle (PET) (mm, average of ten resin particles) | 2.5 | 2.5 | 2.5 | 2.5 | 1.9 | 2.5 | 2.5 |
| Aspect ratio of resin particle (PET) (Average of ten resin particles) | 12 | 12 | 12 | 12 | 38 | 12 | 12 |
| Judgment of maximum diameter of resin particle | ○ | ○ | ○ | ○ | ○ | ○ | ○ |
| Judgment of aspect ratio of resin particle | Δ | Δ | Δ | Δ | ○ | Δ | Δ |
| Shape of resulting material (composite material) | ○ | ○ | ○ | ○ | ○ | ○ | ○ |
| Formability | ○ | ○ | ○ | ○ | ○ | ○ | ○ |
| Tensile strength (MPa) | ○ | ○ | ○ | Δ | ○ | ○ | ○ |
| Impact resistance | ○ | ○ | ○ | ○ | ○ | ○ | ○ |
| Flexural modulus | ⊙ | ⊙ | ⊙ | Δ | ⊙ | ⊙ | ⊙ |
| Cellulose fiber length | ⊙ | ⊙ | ⊙ | - | ⊙ | ⊙ | ⊙ |
| Judgment of aluminum length | ○ | ○ | ○ | - | ○ | ○ | ○ |

Remarks: 'Ex.' means Example according to this invention.

Table 2 (continued)

|  | Ex. 18 | Ex. 19 | Ex. 20 | CEx. 5 | CEx. 6 | CEx. 7 | CEx. 8 |
|---|---|---|---|---|---|---|---|
| Low density PE (parts by mass) |  |  |  | 20 |  |  |  |
| High density PE (parts by mass) | 35.4 | 54 | 58 |  | 56 | 94 | 100 |
| Maleic acid-modified PE | 4 | 4 |  |  | 4 | 4 |  |
| EVA |  |  | 20 |  |  |  |  |
| Pulverized material of laminated paper (parts by mass) | 60 | 40 | 20 | 10 | 40 |  |  |
| PET pellet (parts by mass) |  | 2 |  |  |  | 2 |  |
| Pulverized material of PET sheet (parts by mass) |  |  |  |  |  |  |  |
| Pulverized material of PET bottle (parts by mass) | 0.6 |  | 2 | 70 |  |  |  |
| Cellulose fiber content in composite material (% by mass) | 27.5 | 18.9 | 9.6 | 19.1 | 19.2 | Not contain | Not contain |
| PET content in composite material (% by mass) | 0.6 | 2 | 2 | 70 | Not contain | 2 | Not contain |
| Aluminum content in composite material (% by mass) | 11.1 | 7.0 | 3.6 | 1.9 | 7.4 | Not contain | Not contain |
| Maximum diameter of resin particle (PET) (mm, average of ten resin particles) | 2.5 | 1.3 | 2.5 | - | - | 1.3 | - |
| Aspect ratio of resin particle (PET) (Average of ten resin particles) | 12 | 1.4 | 12 | - | - | 1.4 | - |
| Judgment of maximum diameter of resin particle | ○ | ○ | ○ | - | - | ○ | - |
| Judgment of aspect ratio of resin particle | Δ | × | Δ | - | - | × | - |
| Shape of resulting material (composite material) | ○ | ○ | ○ | × | ○ | ○ | ○ |
| Formability | ○ | ○ | ○ | - | ○ | ○ | ○ |
| Tensile strength (MPa) | ○ | ○ | ○ | - | ○ | ○ | ○ |
| Impact resistance | ○ | Δ | ○ | - | × | × | × |
| Flexural modulus | ⊙ | ⊙ | ⊙ | - | ⊙ | ⊙ | ⊙ |
| Cellulose fiber length | ⊙ | ⊙ | ⊙ | - | ⊙ | - | - |
| Judgment of aluminum length | ○ | ○ | ○ | - | ○ | - | - |

Remarks: 'Ex.' means Example according to this invention, and 'CEx.' means Comparative Example.

As shown in Table 2, the composite material of Comparative Example 6, which did not contain a resin particle, results in inferior impact resistance.

Also, when the blend amount of a resin other than polyolefin resin is too large, a desired composite material (homogeneous kneaded product) was not obtained (Comparative Example 5).

Further, the composite material of Comparative Example 7, which did not contain a cellulose fiber nor a resin particle with a specific shape (the aspect ratio of the resin particle was less than 5), results in inferior impact resistance.

Further, the resin of Comparative Example 8, which was composed of high density polyethylene resin was inferior in impact resistance.

In contrast, the resin composite materials of Examples 11 to 20, formed by dispersing a resin particle with a specific shape, or a specific resin particle and cellulose fiber defined in the present invention, had sufficient formability and excellent impact resistance. Among these, the resin composite materials of Examples 11 to 13, and 15 to 20, which were formed by dispersing a specific resin particle and cellulose fiber defined in the present invention, had sufficient formability and also excellent characteristics of both flexural modulus and impact resistance. In particular, the resin composite materials of Examples 11 to 13, 15 to 18, and 20, which were formed by dispersing a resin particle having a specific aspect ratio and a cellulose fiber, achieved both flexural modulus and impact resistance at a higher level.

In the above Examples, a mode in which the resin particle is composed of PET was shown, but is not limited to PET. For example, also in a case where the resin particle with a specific shape defined in the present invention is formed by using a resin used as a general-purpose engineering plastic, similarly to PET, desired mechanical characteristics can be enhanced by effective reinforcing action of the resin particle.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2019-023066 filed in Japan on February 12, 2019, and Patent Application No. 2019-112377 filed in Japan on June 17, 2019, each of which are entirely herein incorporated by reference.

**EP 3 926 005 A1**

**Claims**

1. A resin composite material, comprising:

   a polyolefin resin; and
   the following (a) or (b) dispersed in the polyolefin resin:

      (a) resin particles containing cellulose fibers and a resin different from the polyolefin resin, and having a maximum diameter of 10 μm or more; and
      (b) resin particles containing a resin different from the polyolefin resin, having a maximum diameter of 10 μm or more, and having an aspect ratio of 5 or more.

2. The resin composite material according to Claim 1, wherein, in the (a) and (b), a maximum diameter of the resin particles is 50 μm or more.

3. The resin composite material according to Claim 1 or 2, comprising cellulose fibers,
   wherein a content of the cellulose fibers in the resin composite material is 0.1% by mass or more and 60% by mass or less.

4. The resin composite material according to any one of Claims 1 to 3, wherein, in the (a) and (b), the resin particles contain a resin having a melting point 10°C or more higher than a melting point of the polyolefin resin.

5. The resin composite material according to any one of Claims 1 to 4, wherein, in the (a) and (b), the resin particles contain a resin having a melting point of 170°C or more and/or a resin exhibiting an endothermic peak of 170°C or more and 350°C or less as measured by differential scanning calorimetry.

6. The resin composite material according to any one of Claims 1 to 5, wherein, in the (a) and (b), the resin particles contain at least one type of polyethylene terephthalate, polybutylene terephthalate, and polyamide.

7. The resin composite material according to any one of Claims 1 to 3, wherein, in the (a) and (b), the resin particles contain a resin having a glass transition temperature of 70°C or more.

8. The resin composite material according to any one of Claims 1 to 3 and 7, wherein, in the (a) and (b), the resin particles contain at least one type of polycarbonate and polyvinyl chloride.

9. The resin composite material according to any one of Claims 1 to 8, wherein, in the resin composite material, a content of the resin particles is 0.1% by mass or more and 60% by mass or less.

10. The resin composite material according to any one of Claims 1 to 9, comprising the (a) dispersed,
    wherein the resin particles of the (a) contain resin particles having an aspect ratio of 5 or more.

11. The resin composite material according to any one of Claims 1 to 10, wherein, in the (a) and (b), a maximum diameter of the resin particles is less than 4 mm.

12. The resin composite material according to any one of Claims 1 to 11, wherein the polyolefin resin contains at least one type of low density polyethylene, high density polyethylene, polypropylene, and an ethylene-based copolymer.

13. The resin composite material according to any one of Claims 1 to 12, wherein the polyolefin resin contains a polyolefin having a melting point of 180°C or less.

14. The resin composite material according to any one of Claims 1 to 13, wherein, in the (a) and (b), the resin particles contain polyethylene terephthalate and/or polyamide.

15. The resin composite material according to any one of Claims 1 to 14,

    wherein the polyolefin resin contains low density polyethylene, and
    wherein, in the (a) and (b), the resin particles contain polyethylene terephthalate.

**16.** The resin composite material according to any one of Claims 1 to 15, comprising cellulose fibers having a fiber length of 0.3 mm or more.

**17.** The resin composite material according to any one of Claims 1 to 16, comprising cellulose fibers having a fiber length of 0.8 mm or more.

**18.** The resin composite material according to any one of Claims 1 to 17, comprising aluminum dispersed.

**19.** The resin composite material according to Claim 18, wherein, in the resin composite material, a content of the aluminum is 1% by mass or more and 40% by mass or less.

**20.** The resin composite material according to Claim 18 or 19, wherein, in the resin composite material, a proportion of the number of aluminum dispersoids having an X-Y maximum length of 3 mm or more in the number of aluminum dispersoids having an X-Y maximum length of 0.005 mm or more is less than 10%,

where the X-Y maximum length is a longer length of an X-axis maximum length and a Y-axis maximum length in the surface of the resin composite material,
the X-axis maximum length is a maximum distance between two intersection points where a straight line drawn in a specific direction (X-axis direction) relative to the aluminum dispersoid intersects with an outer periphery of the aluminum dispersoid, and
the Y-axis maximum length is a maximum distance between two intersection points where a straight line drawn in a direction perpendicular to the X-axis direction (Y-axis direction) intersects with the outer periphery of the aluminum dispersoid.

**21.** The resin composite material according to any one of Claims 1 to 20, wherein at least a part of constituent materials is derived from a recycled material.

**22.** A resin formed body, which is obtainable by using the resin composite material according to any one of Claims 1 to 21.

**23.** The resin composite material according to any one of Claims 1 to 21 or the resin formed body according to Claim 22, which is used for a material or a constituent member for civil engineering, a building material, or an automobile.

*Fig. 1(A)*

Resin particle

Maximum
diameter

*Fig. 1(B)*

Resin particle

Maximum
diameter

# EP 3 926 005 A1

<table>
<tr><th colspan="3">INTERNATIONAL SEARCH REPORT</th><th colspan="2">International application No.<br>PCT/JP2020/004927</th></tr>
</table>

**A. CLASSIFICATION OF SUBJECT MATTER**

C08K 7/02(2006.01)i; C08L 1/00(2006.01)i; C08L 23/00(2006.01)i; C08L 27/00(2006.01)i; C08L 07/02(2006.01)i; C08L 09/00(2006.01)i; C08L 77/00(2006.01)i; C08L 101/00(2006.01)i; C08K 3/08(2006.01)i

FI:      C08L23/00; C08L101/00; C08L1/00; C08K7/02; C08L67/02; C08L69/00; C08L27/06; C08L77/00; C08K3/08

According to International Patent Classification (IPC) or to both national classification and IPC

**B. FIELDS SEARCHED**

Minimum documentation searched (classification system followed by classification symbols)

C08K7/02; C08L1/00; C08L23/00; C08L27/06; C08L67/02; C08L69/00; C08L77/00; C08L101/00; C08K3/08

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2005-336217 A (MITSUBISHI PAPER MILLS LIMITED) 08.12.2005 (2005-12-08) claims, paragraphs [0018]–[0020], [0023], [0024], examples (in particular, example 5), paragraph [0040] | 1-7, 9-17, 21-23<br>18-20<br>8 |
| Y | JP 2010-107736 A (EPSON IMAGING DEVICES CORP.) 05.08.2010 (2010-08-05) claims 1, 4, 5, examples 2, 3 | 18-20 |
| Y | JP 2013-35272 A (TOWA CHEMICAL KK) 21.02.2013 (2013-02-21) examples | 18-20 |
| X<br>A | JP 6-300210 A (IDEMITSU PETROCHEMICAL CO., LTD.) 01.11.1994 (1994-11-01) claims, paragraphs [0029]–[0031], [0003], examples | 1-9, 11-17, 22, 23<br>10, 18-21 |

☐ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 April 2020 (03.04.2020) | Date of mailing of the international search report<br>14 April 2020 (14.04.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2020/004927

| Patent Documents referred in the Report | Publication Date | Patent Family | Publication Date |
|---|---|---|---|
| JP 2005-336217 A | 08 Dec. 2005 | (Family: none) | |
| JP 2010-167736 A | 05 Aug. 2010 | (Family: none) | |
| JP 2013-35272 A | 21 Feb. 2013 | CN 102862247 A examples | |
| JP 6-306216 A | 01 Nov. 1994 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003292740 A
- JP 2000256517 A
- JP 2019023066 A
- JP 2019112377 A